# EUROPEAN PATENT SPECIFICATION

(11) **EP 4 099 501 B1**
(45) Date of publication and mention of the grant of the patent: **17.09.2025**
(21) Application number: 21761311.6
(22) Date of filing: 23.02.2021
(51) Int. Cl.: H01Q 21/00, H01Q 21/08, G01S 7/03, H01Q 1/32, H01Q 9/04, G01S 13/931

(54) **ANTENNA AND RADAR**
ANTENNE UND RADAR
ANTENNE ET RADAR

(30) Priority: 25.02.2020 CN 202010115641
(43) Date of publication of application: 07.12.2022
(73) Proprietor: Shenzhen Yinwang Intelligent Technologies Co., Ltd., Shenzhen, Guangdong 518129 (CN)
(72) Inventor: CHENG, Zhe, Shenzhen, Guangdong 518129 (CN); YANG, Rui, Shenzhen, Guangdong 518129 (CN)
(74) Representative: Thun, Clemens
(86) International application number: PCT/CN2021/077339
(87) International publication number: WO 2021/169928

(56) References cited:
- CN-A- 107 026 322
- CN-A- 108 075 225
- CN-U- 201 590 486
- CN-U- 203 674 388
- CN-U- 204 793 183
- CN-U- 208 062 245
- KR-A- 20100 113 347
- US-A1- 2009 009 399
- US-A1- 2016 359 238
- US-B2- 6 670 910
- MOHD SHAH M. S. R. ET AL: "Dual Linearly Polarized Microstrip Array Antenna", TRENDS IN TELECOMMUNICATIONS TECHNOLOGIES, 1 March 2010 (2010-03-01), XP055772893, Retrieved from the Internet <URL:https://cdn.intechopen.com/pdfs/9685/intech-dual_linearly_polarized_microstrip_array_antenna.pdf> [retrieved on 20210205]

## Description

### TECHNICAL FIELD

This application relates to the detection field, and in particular, to an antenna and a radar.

### BACKGROUND

With economic development, vehicles have become the most important means of transportation for people. As a sharp increase in a quantity of the vehicles causes frequent traffic accidents, personnel and economic loss is huge. Therefore, it is necessary to sense a surrounding obstacle by disposing a sensor on a vehicle. An automotive radar has an obvious effect in reducing the traffic accidents. As a key component in a wireless electronic device, an antenna significantly affects performance indicators of an entire radar system, and is especially widely applied to the field of automatic driving.

The antenna is one of the most important front-end passive components of a communication device. Thus the antenna plays an important role for performance of a communication product. Currently, a feed network of array antennas may generally employ microstrips, waveguides, or substrate-integrated waveguides. The microstrip feed network may meet an equal-amplitude in-phase requirement through a design of a parallel-fed structure.

In the conventional technology, an antenna array of a multilayer parallel-fed form is used, a bottom layer of the antenna array is a feed network, and an antenna unit is fed in a parallel-fed manner. Therefore, antennas of the antenna array have a wide bandwidth. However, because the antennas in the foregoing design use a multilayer structure, processing difficulty and processing costs of the antenna array are very high.
Further, the document Mohd Shah M. S.R. et. al., "Dual Linearly Polarized Microstrip Array Antenna", Trends in Telecommunications Technologies, March 1, 2010 refers to a dual linearly polarized microstrip array antenna.
Further, the document US 2009/009399 A1 refers to a planar antenna array including an array of planar radiator elements interconnected through a feed line network of planar coplanar transmission lines that enable high-efficiency operation at millimeter wave operating frequencies. For example, a feed network may be formed with a network of coplanar strip line transmission lines including one or more coplanar strip line (CPS) and one or more coplanar waveguide (CPW) transmission line, which are interconnected using balun structures.
Further, the document US 2016/359238 A1 refers to a feed line having a main feed line, two sub-feed lines, and a distributor adapted to branch the main feed line into the two sub-feed lines. The distributor includes: two outer edges and formed as curved lines connecting both side edges and of the main feed line to first edges of the sub-feed lines, and an inner edge connecting second edges of the sub-feed lines to each other, in which the inner edge is configured to include two inner curved lines and that are convex in mutual directions, and has a pointed shape that is concave toward the main feed line side.

### SUMMARY

Embodiments of this application provide an antenna and a radar, to reduce antenna processing difficulty and costs. This problem is solved by the subject matter of the independent claims. Further implementation forms are provided in the dependent claims.

According to a first aspect, this application provides an antenna, including a first radiating element and a first feed line. A first end of the first feed line is connected to the first radiating element. The first radiating element and the first feed line are arranged on a same surface of a dielectric substrate. The first feed line includes a first feed line segment, and an acute angle between the first feed line segment and a current direction of the first radiating element is greater than or equal to 20 degrees, and is less than or equal to 70 degrees. A feeding manner of the antenna is parallel feeding.

It should be noted that, in this embodiment, the first radiating element may include a feed point, and the feed point is a feed connection point between a feed network and the first radiating element. A perpendicular line of the first radiating element on a tangent plane of the feed point may be understood as the current direction of the first radiating element in this embodiment. It should be noted that, in this embodiment, during operation, a current on the first radiating element may include a plurality of current directions, and there may be a slight difference between the plurality of current directions. In this embodiment, the current direction on the first radiating element may represent current directions of most currents on the first radiating element.

In this embodiment of this application, impact of radiation of the feed line segment on cross polarization of the radiating element is less than impact of radiation of the feed line on the cross polarization of the radiating element when the feed line is parallel to the current direction of the radiating element. Similarly, impact of the radiation of the at least one feed line segment on co-polarization of the radiating element is less than impact of the radiation of the feed line on the co-polarization of the radiating element when the feed line is perpendicular to the current direction of the radiating element. In this way, when the feed line and the radiating element are located at a same layer, impact of radiation of the feed line on the radiating element is reduced. In addition, the feed line and the radiating element are disposed at a same layer. This reduces material costs and processing difficulty.

In an optional design of the first aspect, a difference between a length of the first feed line segment and a preset wavelength is less than a preset value, and the preset wavelength is one half of a dielectric wavelength of the dielectric substrate.

In this embodiment, phases of feed line segments of a half-wavelength (one half of the dielectric wavelength) or close to the half-wavelength are opposite in a far field, so that some radiant energy counteracts each other. This reduces impact of the radiation of the feed line on co-polarization and cross polarization of an antenna pattern.

In an optional design of the first aspect, the first feed line further includes a second feed line segment. A first end of the first feed line segment is connected to a first end of the second feed line segment, and an included angle between the first feed line segment and the second feed line segment is greater than or equal to 70 degrees, and is less than or equal to 135 degrees.

In this embodiment of this application, when the feed line is parallel to the current direction of the radiating element, the radiation of the feed line and the cross polarization of the radiating element superimpose each other in the far field. This causes an elevation of a side lobe of the antenna pattern. When the feed line is perpendicular to the current direction of the radiating element, the radiation of the feed line and the co-polarization of the radiating element superimpose and affect each other in the far field. This causes a distortion of the antenna pattern. When the included angle between the feed line and the current direction of the radiating element is greater than or equal to 20 degrees and less than or equal to 70 degrees (for example, the included angle is 45 degrees), and the feed line is a bent line (the included angle between the first feed line segment 203 and the second feed line segment 204 is greater than or equal to 70 degrees and less than or equal to 135 degrees, for example, 90 degrees), a phase of the first feed line segment 203 and a phase of the second feed line segment 204 are opposite in the far field, so that some radiant energy counteracts each other. In this case, the impact of the radiation of the feed line on the co-polarization and the cross polarization of the antenna pattern is further reduced.

In an optional design of the first aspect, a second end of the first feed line segment is connected to the first radiating element.

The antenna further includes:
a first power splitter, a second radiating element, and a second feed line, where the first end of the second feed line is connected to the second radiating element, and is configured to feed the second radiating element. The first power splitter, the second radiating element, the second feed line, and the first radiating element are arranged on a same surface of the dielectric substrate. A first end of the first power splitter is separately connected to a second end of the first feed line and a second end of the second feed line. The second radiating element and the first radiating element are symmetrically arranged on the dielectric substrate relative to the first power splitter. The second feed line and the first feed line are symmetrically arranged on the dielectric substrate relative to the first power splitter.

The antenna further includes a second power splitter and a third feed line. The second power splitter, the third feed line, and the first radiating element are arranged on a same surface of the dielectric substrate. The second power splitter and the first power splitter are centrosymmetric on the dielectric substrate relative to a center point of the second radiating element, and the other end of the first power splitter is connected to an end of the second power splitter through the third feed line. The third feed line includes at least one third feed line segment, and an acute angle between each third feed line segment and the current direction of the first radiating element is greater than or equal to 20 degrees, and is less than or equal to 70 degrees. According to the foregoing design, space occupation of an antenna array can be reduced, and space utilization of the antenna array is improved.

In an optional design of the first aspect, a difference between a length of each third feed line segment and the preset wavelength is less than the preset value, and the preset wavelength is one half of the dielectric wavelength of the dielectric substrate.

In an optional design of the first aspect, the first end of the first power splitter and a second end of the second power splitter are in a same orientation, and a second end of the first power splitter and a first end of the second power splitter are in a same orientation, such that the second power splitter is placed in a reverse orientation with respect to the first power splitter. According to the foregoing design, space occupation of an antenna array can be reduced, and space utilization of the antenna array is improved.

In an optional design of the first aspect, an interval between the first radiating element and the second radiating element is greater than or equal to one half of the dielectric wavelength of the dielectric substrate, and is less than or equal to the dielectric wavelength of the dielectric substrate.

In an optional design of the first aspect, an operating frequency of the antenna is greater than 60 GHZ. In a high-frequency scenario, because the dielectric substrate is relatively thick relative to the dielectric wavelength of the dielectric substrate, when a parallel-fed network and the radiating element are disposed at a same layer, greater impact is caused on a pattern of the radiating element. When this embodiment is applied to the high-frequency scenario, impact caused by the parallel-fed network on the pattern of the radiating element can be greatly reduced.

In an optional design of the first aspect, a ratio of the dielectric wavelength to a thickness of the dielectric substrate is less than 20.

In an optional design of the first aspect, the antenna further includes:
a reflection panel, where the reflection panel and the feed line are disposed on opposite surfaces of the dielectric substrate.

According to a second aspect, this application provides a radar, including the antenna according to any one of the first aspect or the optional designs of the first aspect. The radar receives and sends a signal through the antenna.

In an optional design of the second aspect, the radar is a vehicle-mounted radar.

In this application, when impact of the feed line on a pattern of the radiating element is reduced, a feed network and the radiating element are disposed at a same layer of the dielectric substrate. This reduces processing difficulty and costs of a microstrip antenna.

### BRIEF DESCRIPTION OF DRAWINGS

FIG. 1a is a schematic diagram of radiation of a feed line;
FIG. 1b is a schematic diagram of an architecture of a scenario according to an embodiment of this application;
FIG. 2 is a schematic diagram of an embodiment of a microstrip antenna according to an embodiment of this application;
FIG. 3a, FIG. 3b, and FIG. 3c are each a schematic diagram of a structure of a microstrip antenna according to an embodiment of this application;
FIG. 4 is a schematic diagram of a structure of a microstrip antenna according to an embodiment of this application;
FIG. 5 is a schematic diagram of a structure of a microstrip antenna according to an embodiment of this application;
FIG. 6 is a schematic diagram of a structure of a microstrip antenna according to an embodiment of this application;
FIG. 7 is a schematic diagram of a structure of a microstrip antenna according to an embodiment of this application;
FIG. 8 is a schematic diagram of a simulation effect of a microstrip antenna according to an embodiment of this application; and
FIG. 9 is a schematic diagram of a structure of a communication system according to this application.

### DESCRIPTION OF EMBODIMENTS

Embodiments of this application provide a microstrip antenna, to reduce processing difficulty and costs of the microstrip antenna.

The following describes embodiments of this application with reference to the accompanying drawings. A person of ordinary skill in the art may learn that, with technology development and emergence of a new scenario, the technical solutions provided in embodiments of this application are also applicable to a similar technical problem.

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, product, or device.

With economic development, vehicles have become the most important means of transportation for people. As a sharp increase in a quantity of the vehicles causes frequent traffic accidents, personnel and economic loss is huge. However, an automotive radar has an obvious effect in reducing the traffic accidents. As a key component in a wireless electronic device, an antenna significantly affects a performance indicator of an entire radar system.

In the conventional technology, an antenna array of a multilayer parallel-fed form is used, a bottom layer of the antenna array is a feed network, and an antenna unit is fed in a parallel-fed manner. Therefore, antennas of the antenna array have a wide bandwidth. However, because the antennas in the foregoing design use a multilayer structure, processing difficulty and processing costs of the antenna array are very high. However, an antenna array of a single-layer pure parallel-fed form is difficult to implement in a millimeter wave due to a radiation problem of a feed line. Therefore, the antenna array of the pure parallel-fed form uses a multilayer form, that is, the feed network and the antenna unit are separately located at an upper layer and a lower layer. However, this increases the processing difficulty and costs.

Specifically, when a feed line of a microstrip antenna transmits an electromagnetic wave, a part of the electromagnetic wave is in air, and a part of the electromagnetic wave is in a dielectric substrate. In a low frequency band (for example, below 40 GHz), a ratio of a thickness of a commonly used dielectric to a wavelength is about 1/20 to 1/50. In this case, most of the electromagnetic wave is bound between the feed line and conductor ground, and energy of the electromagnetic wave radiated to free space is low. However, in a high frequency band (for example, above 60 GHz), a ratio of a thickness of the dielectric substrate to the wavelength is approximately greater than 1/20. In this case, a small part of the electromagnetic wave is radiated to free space through the feed line, and the small part of the electromagnetic wave radiated to the free space greatly affects a pattern of a radiating element.

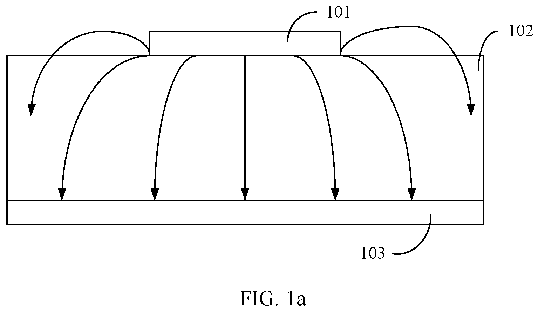

FIG. 1a is a schematic diagram of radiation of a feed line. As shown in FIG. 1a, the feed line 101 is disposed on one side of a dielectric substrate, and a reflection panel 103 is disposed on the other side of the dielectric substrate 102. When the dielectric substrate 102 is thick, electromagnetic wave radiation of the feed line may reach the reflection panel 103 through the dielectric substrate 102. However, in a high frequency band (for example, above 60 GHz), a ratio of a thickness of the dielectric substrate 102 to a wavelength is approximately greater than 1/20. In this case, a small part of the electromagnetic wave is radiated to free space through the feed line 101, and the small part of the electromagnetic wave radiated to the free space greatly affects a pattern of a radiating element.

To resolve the foregoing problem, this application provides a microstrip antenna.

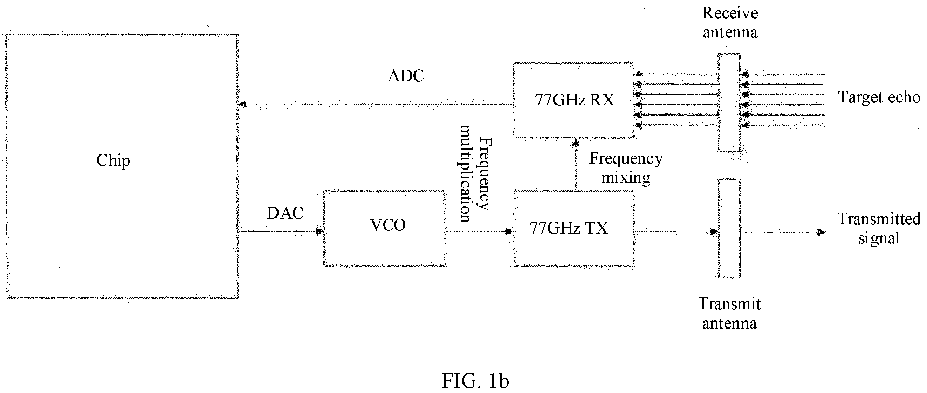

First, a schematic diagram of an architecture of an optional application scenario in an embodiment of this application is described. FIG. 1b is a schematic diagram of an architecture of a scenario according to an embodiment of this application. As shown in FIG. 1b, this embodiment of this application may be applied to a vehicle-mounted radar system. During operation, an analog-to-digital converter (analog-to-digital converter, DAC) wave generated by a chip is sent to a voltage-controlled oscillator (voltage-controlled oscillator, VCO) to generate a linear frequency-modulated continuous wave. A signal (for example, 77 GHz) generated through frequency multiplication is transmitted through a microstrip antenna (a transmit antenna). A target echo is received through a microstrip antenna (a receive antenna) and frequency mixing is performed on the target echo and a transmit signal to generate an intermediate frequency signal. The intermediate frequency signal is sampled and processed through the chip.

This application may be applied to the vehicle-mounted radar system, and the vehicle-mounted radar system may be used for, but is not limited to, anti-collision, imaging, adaptive cruise control, blind spot monitoring, and the like.

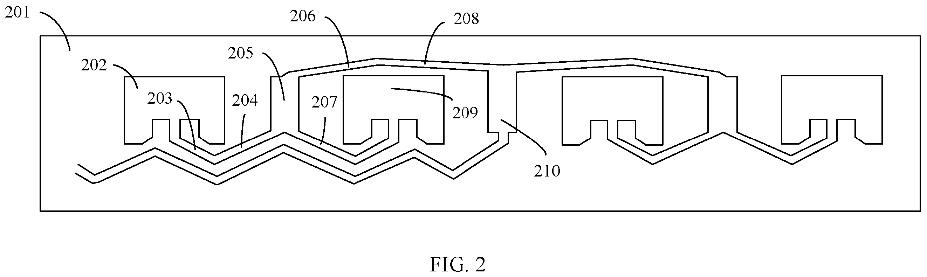

FIG. 2 is a schematic diagram of an embodiment of an antenna according to an embodiment of this application. As shown in FIG. 2, the antenna provided in this embodiment of this application includes a first radiating element 202 and a first feed line. A first end of the first feed line is connected to the first radiating element. The first radiating element 202 and the first feed line are arranged on a same surface of a dielectric substrate 201. The first feed line includes a first feed line segment, and an acute angle between the first feed line segment and a current direction of the first radiating element 202 is greater than or equal to 20 degrees, and is less than or equal to 70 degrees.

It should be noted that the first radiating element may alternatively include the radiating element itself and a small segment of a lead (for example, a small vertical downward segment of a feed lead that is directly connected to the first radiating element 202 and that is shown in FIG. 2) connected to the first radiating element. That the first feed line is connected to the first radiating element may mean that the first feed line is connected to the lead directly connected to the first radiating element.

In a possible design, the first radiating element 202 is one of a plurality of radiating elements included in the antenna.

In a possible design, a feed network includes the first feed line (including the first feed line segment 203). In other words, the first feed line is a segment of a feed line included in the feed network. A first end of the first feed line 203 is connected to the first radiating element 202, and is configured to feed the first radiating element 202. In other words, the first feed line 203 is a feed line segment directly connected to the first radiating element 202.

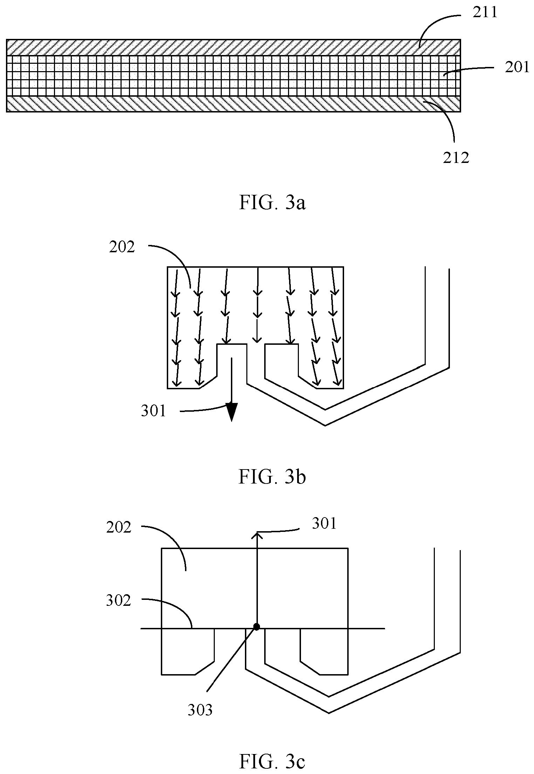

In a possible design, the first radiating element 202 and the first feed line are arranged on a same surface of the dielectric substrate 201. FIG. 3a is a schematic diagram of a structure of a microstrip antenna according to an embodiment of this application. As shown in FIG. 3a, the microstrip antenna includes the dielectric substrate 201, and the dielectric substrate includes two opposite surfaces. 211 (the feed network and the radiating element) is disposed on one surface, and an antenna formed by a reflection panel 212 may be disposed on the other surface. The reflection panel 212 may also be expressed as conductor ground or a metal floor. The reflection panel 212 is a conductor ground plane (English: ground plane), and the dielectric substrate 201 enables an open circuit between the radiating element and the reflection panel 212.

In a possible design, the first feed line includes a first feed line segment, and an acute angle between the first feed line segment and a current direction of the first radiating element is greater than or equal to 20 degrees, and is less than or equal to 70 degrees.

In a possible design, the first feed line includes at least one feed line segment, the first feed line segment is one of the at least one feed line segment, and the acute angle between each of the at least one feed line segment and the current direction of the first radiating element is greater than or equal to 20 degrees, and is less than or equal to 70 degrees.

When the radiating element and the feed network are at a same layer, radiation of the feed line has great impact on a pattern and bandwidth of the radiating element. This causes deformation of the pattern and narrowing of the bandwidth. Specifically, when the feed line is parallel to the current direction of the radiating element, the radiation of the feed line and cross polarization of the radiating element superimpose each other in a far field. This causes an elevation of a side lobe of an antenna pattern. When the feed line is perpendicular to the current direction of the radiating element, the radiation of the feed line and the co-polarization of the radiating element superimpose and affect each other in the far field. This causes a distortion of the antenna pattern. In this embodiment of this application, the first feed line includes at least one feed line segment, and the acute angle between the first feed line segment and the current direction of the first radiating element is greater than or equal to 20 degrees and less than or equal to 70 degrees. In other words, the included angle between the at least one feed line segment and the current direction of the radiating element is around 45 degrees. The impact of the radiation on the radiating element may be decomposed into two directions: cross polarization and co-polarization. In this embodiment of this application, the impact of the radiation of the at least one feed line segment on the cross polarization of the radiating element is less than the impact of the radiation of the feed line on the cross polarization of the radiating element when the feed line is parallel to the current direction of the radiating element. Similarly, the impact of the radiation of the at least one feed line segment on the co-polarization of the radiating element is less than the impact of the radiation of the feed line on the co-polarization of the radiating element when the feed line is perpendicular to the current direction of the radiating element. In this way, when the feed line and the radiating element are located at a same layer, impact of radiation of the feed line on the radiating element is reduced. In addition, the feed line and the radiating element are disposed at a same layer. This reduces material costs and processing difficulty.

It should be noted that, in this embodiment, the first radiating element may include a feed point, and the feed point is a feed connection point between a feed network and the first radiating element. A perpendicular line of the first radiating element on a tangent plane of the feed point may be understood as the current direction of the first radiating element in this embodiment.

It should be noted that, during operation, a current on the first radiating element may include a plurality of current directions, and there may be a slight difference between the plurality of current directions. In this embodiment, the current direction on the first radiating element may represent an approximate current direction on the first radiating element. Specifically, FIG. 3b is a schematic diagram of a structure of a radiating element. As shown in FIG. 3b, during operation, direction distribution of currents on the first radiating element 202 may be as shown in FIG. 3b. Although the directions of the currents on the first radiating elements are not strictly the same, there is a direction 301 that can roughly represent overall current distribution. It should be noted that the current direction 301 on the first radiating element shown in FIG. 3b is merely an example. In actual application, a direction different from the current direction 301 shown in FIG. 3b may be selected. This is not limited herein.

FIG. 3c is a schematic diagram of a structure of a radiating element. As shown in FIG. 3c, the first radiating element 202 may include a feed point 303, and a direction of a perpendicular line of the first radiating element 202 on a tangent plane 302 of the feed point 303 may be considered as the current direction 301 of the first radiating element.

It should be noted that, in this embodiment, when there is a depression or a protrusion on the surface of the radiating element, a current direction of the radiating element may differ greatly from the current direction of the first radiating element. The foregoing special case is not considered in this embodiment, and only the approximate current direction of the first radiating element when the first radiating element works may be indicated.

The antenna in this embodiment of this application may be a microstrip antenna. A feeding manner of the microstrip antenna is parallel feeding. The microstrip antenna may include a plurality of radiating elements that are arranged along an array. A quantity of the radiating elements of the microstrip antenna may be 2N, where N is greater than or equal to 2. The radiating element is an apparatus for receiving and sending an electromagnetic signal, and is configured to receive a high-frequency electromagnetic wave from space or transmit a high-frequency electromagnetic wave from a chip. The microstrip antenna further includes a feed network. The feed network is connected to a plurality of radiating arrays included in the microstrip antenna, and is configured to feed the plurality of radiating elements. It should be noted that in this embodiment of this application, feeding may also be understood as signal transmission. The feed network includes a feed line and a power splitter. One end of the feed network is connected to a chip, and the other end includes a plurality of feed line branches. Each feed line branch is connected to one radiating element. The feed network performs power allocation on an input signal of the chip through the power splitter, and transmits a signal to the plurality of radiating elements in parallel through the plurality of feed line branches, so as to allocate received energy to the radiating elements in an equal-amplitude same-phase mode, or combine signals received by the plurality of radiating elements, and transmit the signals to the chip through the feed line. The radiating elements are basic structural units of the microstrip antenna, and can effectively radiate or receive electromagnetic waves. The feed line is a transmission line (English: transmission line) that connects the radiating element and a radio transceiver (for example, the chip).

The microstrip antenna shown in FIG. 2 is an antenna array including four radiating elements, including four radiating elements that are arranged at equal intervals along a straight line, three T-type power splitters, and a feed line. The three T-type power splitters are located between two adjacent radiating elements of the four radiating elements. The T-type power splitter at the center is placed in a forward direction, and the T-type power splitters on left and right sides are placed in a reverse direction. The T-type power splitters and the feed line form a feed network. It should be noted that the foregoing directional descriptions of "placed in a forward direction" and "placed in a reverse direction" are merely intended to indicate that a direction of the power splitter at the center is different from a direction of the power splitters on the left and right sides, and do not constitute an absolute limitation on the directions of the power splitters. One end of the feed network is connected to four radiating elements, and the other end is a general input port, and is connected to a signal transceiver unit such as the chip, to form an entire antenna array.

It should be noted that the at least one feed line segment may be one or more feed line segments. When there are a plurality of feed line segments whose acute angles with the current direction of the first radiating element are greater than or equal to 20 degrees and less than or equal to 70 degrees, the acute angles between the feed line segments and the current direction of the first radiating element may be the same or different. In actual application, the acute angle may be designed based on an arrangement of the antenna array. This is not limited herein.

In a possible design, a difference between a length of each feed line segment and a preset wavelength is less than a preset value. The preset wavelength is one half of a dielectric wavelength of the dielectric substrate, and the preset value may be but is not limited to a quarter of the dielectric wavelength. In this embodiment, phases of feed line segments of a half-wavelength (one half of the dielectric wavelength) or close to the half-wavelength are opposite in a far field, so that some radiant energy counteracts each other. This reduces impact of the radiation of the feed line on co-polarization and cross polarization of an antenna pattern.

The at least one feed line segment includes the first feed line segment 203 and a second feed line segment 204. A first end of the first feed line segment 203 is connected to a first end of the second feed line segment 204. An included angle between the first feed line segment 203 and the second feed line segment 204 is greater than or equal to 70 degrees, and is less than or equal to 135 degrees.

When the feed line is parallel to the current direction of the radiating element, the radiation of the feed line and the cross polarization of the radiating element superimpose each other in the far field. This causes an elevation of a side lobe of the antenna pattern. When the feed line is perpendicular to the current direction of the radiating element, the radiation of the feed line and the co-polarization of the radiating element superimpose and affect each other in the far field. This causes a distortion of the antenna pattern. When the included angle between the feed line and the current direction of the radiating element is greater than or equal to 20 degrees and less than or equal to 70 degrees (for example, the included angle is 45 degrees), and the feed line is a bent line (the included angle between the first feed line segment 203 and the second feed line segment 204 is greater than or equal to 70 degrees and less than or equal to 135 degrees, for example, 90 degrees), a phase of the first feed line segment 203 and a phase of the second feed line segment 204 are opposite in the far field, so that some radiant energy counteracts each other. In this case, the impact of the radiation of the feed line on the co-polarization and the cross polarization of the antenna pattern is further reduced.

In an embodiment, a structure of the at least one feed line segment may be the same as that shown in FIG. 2. The feed line connected to the first radiating element 202 includes feed line segments (the first feed line segment 203 and the second feed line segment 204) connected to each other, and the included angle between the feed line segments may be greater than or equal to 70 degrees and less than or equal to 135 degrees.

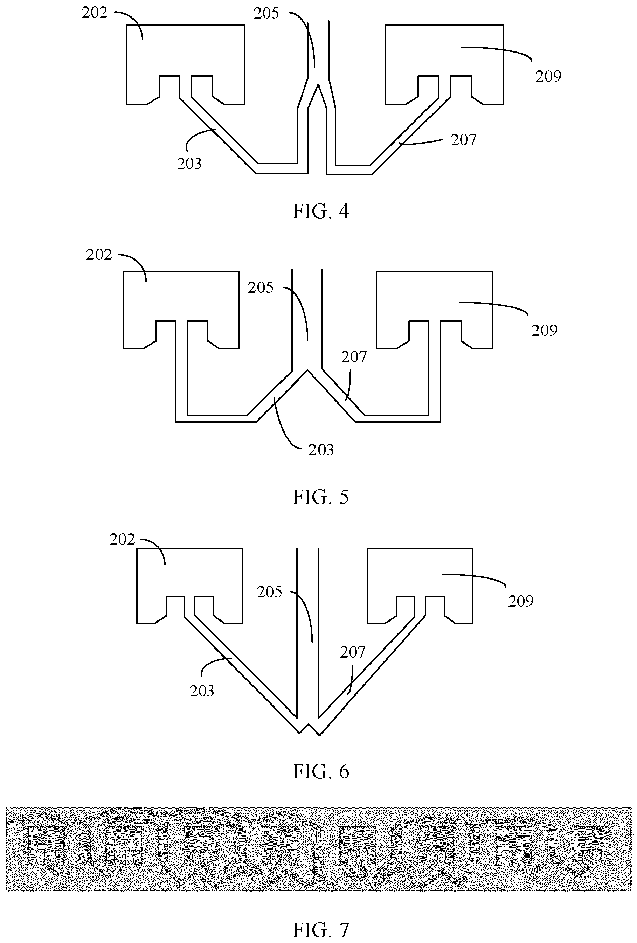

In an embodiment, a structure of the at least one feed line segment may be the same as that shown in FIG. 4. An included angle between the first feed line segment 203 connected to the first radiating element 202 and a current direction of the radiating element 202 is greater than or equal to 20 degrees, and is less than or equal to 70 degrees (for example, an included angle of 45 degrees). According to the foregoing design, space occupation of an antenna array can be reduced, and space utilization of the antenna array is improved.

In an embodiment, a structure of the at least one feed line segment may be the same as that shown in FIG. 5. An included angle between the feed line connected to the first radiating element 202 and a current direction of a radiating element is equal to 90 degrees, and the first feed line segment 203 whose included angle with the current direction of the radiating element is greater than or equal to 20 degrees and less than or equal to 70 degrees is not directly connected to the radiating element.

In an embodiment, a structure of the at least one feed line segment may be the same as that shown in FIG. 6. An included angle between the first feed line segment 203 connected to the first radiating element 202 and a current direction of the radiating element 202 is greater than or equal to 20 degrees, and is less than or equal to 70 degrees.

As shown in FIG. 2, the at least one feed line segment includes the first feed line segment 203 and the second feed line segment 204. The first feed line segment 203 and the second feed line segment 204 are included. A first end of the first feed line segment 203 is connected to a first end of the second feed line segment 204. A second end of the first feed line segment 203 is connected to the first radiating element 202, and is configured to feed the first radiating element 202. The first end of the first feed line 203 in this embodiment is equivalent to the second end of the first feed line segment 203.

In this embodiment of this application, the microstrip antenna further includes: a first power splitter 205, a second radiating element 209, and a second feed line 207. The first end of the second feed line 207 is connected to the second radiating element 209, and is configured to feed the second radiating element 209. The first power splitter 202, the second radiating element 209, the second feed line 207, and the first radiating element 202 are arranged on a same surface of the dielectric substrate 201. A first end of the first power splitter 205 is separately connected to a second end of the first feed line and a second end of the second feed line 207, the second radiating element 209 and the first radiating element 202 are symmetrically arranged on the dielectric substrate 201 relative to the first power splitter 205, and the second feed line 207 and the first feed line are symmetrically arranged on the dielectric substrate 201 relative to the first power splitter 205.

In this embodiment of this application, the microstrip antenna further includes a second power splitter 209 and a third feed line (206, 208). The second power splitter 210, the third feed line (206, 208), and the first radiating element 202 are arranged on a same surface of the dielectric substrate 201. The second power splitter 210 on the dielectric substrate 201 and the first power splitter 205 are centrosymmetric relative to a center point of the second radiating element 209, and the other end of the first power splitter 205 is connected to an end of the second power splitter 210 through the third feed line (206, 208). The third feed line includes at least one third feed line segment, and an acute angle between each third feed line segment and the current direction of the first radiating element is greater than or equal to 20 degrees, and is less than or equal to 70 degrees. Optionally, a difference between a length of each third feed line segment and a preset wavelength is less than a preset value, and the preset wavelength is one half of the dielectric wavelength of the dielectric substrate. For example, the third feed line segment may be the feed line segment 206 and/or the feed line segment 208 shown in FIG. 2. According to the foregoing design, space occupation of an antenna array can be reduced, and space utilization of the antenna array is improved.

In this embodiment of this application, the first end of the first power splitter 205 and a second end of the second power splitter 210 are in a same direction, and a second end of the first power splitter 205 and a first end of the second power splitter 210 are in a same direction. According to the foregoing design, the antenna array may be further miniaturized.

In this embodiment of this application, an interval between the first radiating element 202 and the second radiating element 209 is greater than or equal to one half of the dielectric wavelength of the dielectric substrate, and is less than or equal to the dielectric wavelength of the dielectric substrate.

Optionally, in this embodiment of this application, an operating frequency of the antenna is greater than 60 GHZ. In a high-frequency scenario, because the dielectric substrate is relatively thick relative to the dielectric wavelength of the dielectric substrate, when a parallel-fed network and the radiating element are disposed at a same layer, greater impact is caused on a pattern of the radiating element. Optionally, in this embodiment of this application, a ratio of the dielectric wavelength to a thickness of the dielectric substrate is less than 20. In the high-frequency scenario, because the dielectric substrate is relatively thick relative to the dielectric wavelength of the dielectric substrate, when the parallel-fed network and the radiating element are disposed at the same layer, greater impact is caused on the pattern of the radiating element. When this embodiment is applied to the high-frequency scenario, impact caused by the parallel-fed network on the pattern of the radiating element can be greatly reduced.

Optionally, in this embodiment of this application, the interval between the first radiating element 202 and the second radiating element 209 is greater than or equal to one half of the dielectric wavelength of the dielectric substrate, and is less than or equal to the dielectric wavelength of the dielectric substrate.

Embodiments of this application provide an antenna, including a first radiating element and a first feed line. A first end of the first feed line is connected to the first radiating element. The first radiating element and the first feed line are arranged on a same surface of a dielectric substrate. The first feed line includes a first feed line segment, and an acute angle between the first feed line segment and a current direction of the first radiating element is greater than or equal to 20 degrees, and is less than or equal to 70 degrees. A feeding manner of the antenna is parallel feeding. In this application, when impact of the feed line on a pattern of the radiating element is reduced, a feed network and the radiating element are disposed at a same layer of the dielectric substrate. This reduces processing difficulty and costs of a microstrip antenna.

FIG. 7 is a schematic diagram of a structure of a microstrip antenna according to an embodiment of this application. Different from the microstrip antenna shown in FIG. 2, the microstrip antenna in FIG. 7 has different specifications, and is an antenna array including eight radiating elements. However, it is the same as FIG. 2, for each radiating element, a feed line directly connected to the radiating element or a feed line connected to a power splitter may include a feed line segment that forms an included angle with the radiating element. For details, refer to the microstrip antennas shown in FIG. 2 to FIG. 6 and the descriptions in the corresponding embodiments. Details are not described herein again. It should be noted that the microstrip antenna may further include 2N radiating elements. This is not limited in this application.

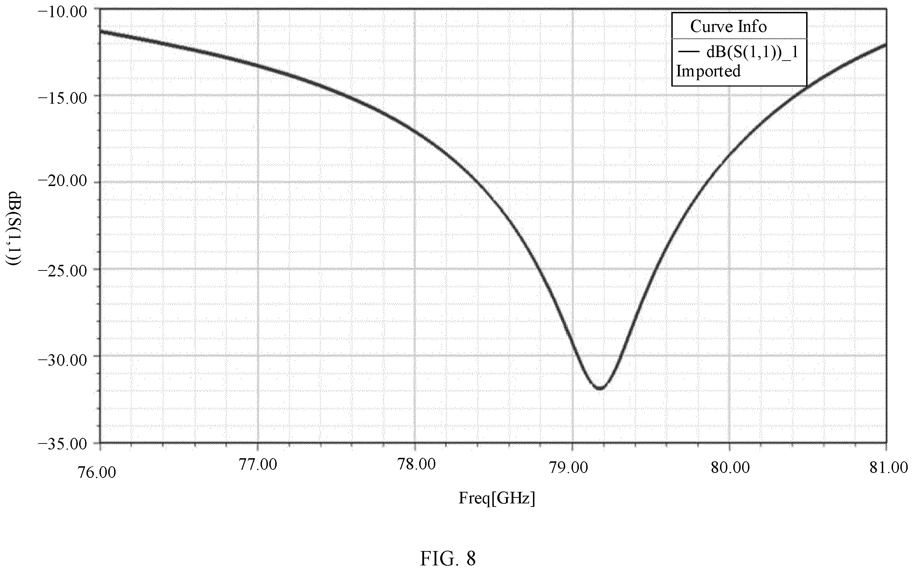

FIG. 8 is a schematic diagram of a simulation effect of a microstrip antenna according to an embodiment of this application. As shown in FIG. 8, in a high frequency band (a frequency band between 76 GHz and 81 GHz), this application corresponds to a noise below -10 dB. Therefore, a feed line has little impact on a pattern of a radiating element.

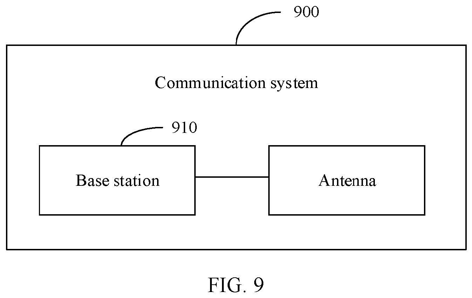

Refer to FIG. 9. An embodiment of this application further provides a communication system 900. The communication system 900 includes a base station 910 and an antenna. The base station 910 may receive and send a signal through the antenna. The antenna may be integrated into the base station 910, or may be separately disposed from the base station 910. The antenna may be the antenna shown in FIG. 2 to FIG. 7. Because the antenna has been described in detail in the foregoing embodiments, details are not described herein again.

The base station 910 may refer to a radio transceiver, such as a cellsite (cellsite) in a cellular network, a wireless access point (wireless access point, WAP) in a wireless local area network (wireless local area network, WLAN).

Embodiments of this application further provide a radar. The radar may be applied to a vehicle, and the radar may receive and send a signal through an antenna. The antenna may be integrated into the radar or may be separately disposed from the radar. The antenna may be the antenna shown in FIG. 2 to FIG. 7. Because the antenna has been described in detail in the foregoing embodiments, details are not described herein again.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, alternatively, a specific hardware structure used to achieve a same function may be of various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, all or some of the procedures or functions according to the embodiments of this application are generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

## Claims

1. An antenna (201) comprising:
• a first radiating element (202) and a first feed line (203, 204), wherein a first end of the first feed line (203, 204) is connected to the first radiating element (202) and is configured to feed the first radiating element (202), wherein the first radiating element (202) and the first feed line (203, 204) are arranged on a same first surface of a dielectric substrate, wherein the first feed line (203, 204) comprises a first feed line segment (203), and an acute angle between the first feed line segment (203) and a current direction of the first radiating element (202) is greater than or equal to 20 degrees, and is less than or equal to 70 degrees,
• a first power splitter (205), a second radiating element (209), and a second feed line (207), wherein a first end of the second feed line (207) is connected to the second radiating element (209) and is configured to feed the second radiating element (209), wherein the first power splitter (205), the second radiating element (209), the second feed line (207), and the first radiating element (202) are arranged on the same first surface of the dielectric substrate, wherein a first end of the first power splitter (205) is separately connected to a second end of the first feed line (203, 204) and a second end of the second feed line (207), the second radiating element (209) and the first radiating element (202) are symmetrically arranged on the dielectric substrate relative to the first power splitter (205), and the second feed line (207) and the first feed line (203, 204) are symmetrically arranged on the dielectric substrate relative to the first power splitter (205), wherein a feeding manner of the antenna (201) is parallel feeding,
• a second power splitter (210) and a third feed line (206, 208), wherein the second power splitter (210), the third feed line (206, 208), and the first radiating element (202) are arranged on the same first surface of the dielectric substrate, wherein the second power splitter (210) and the first power splitter (205) are centrosymmetric on the dielectric substrate relative to a center point of the second radiating element (209), and a second end of the first power splitter (205) is connected to a first end of the second power splitter (209) through the third feed line (206, 208), wherein the third feed line (206, 208) comprises at least one third feed line segment, and an acute angle between each third feed line segment and the current direction of the first radiating element (202) is greater than or equal to 20 degrees, and is less than or equal to 70 degrees.

2. The antenna according to claim 1, wherein the first feed line further comprises a second feed line segment; and
a first end of the first feed line segment is connected to a first end of the second feed line segment, and an included angle between the first feed line segment and the second feed line segment is greater than or equal to 70 degrees, and is less than or equal to 135 degrees.

3. The antenna according to claim 2, wherein a second end of the first feed line segment is connected to the first radiating element.

4. The antenna according to any of the preceding claims, wherein the first end of the first power splitter and a second end of the second power splitter are in a same orientation, and the second end of the first power splitter and the first end of the second power splitter are in a same orientation, such that the second power splitter is placed in a reverse orientation with respect to the first power splitter.

5. The antenna according to any one of claims 1 to 4, wherein an operating frequency of the antenna is greater than 60 GHz.

6. The antenna according to any one of claims 1 to 5, wherein the antenna further comprises:
a reflection panel, wherein the reflection panel is disposed on a second surface of the dielectric substrate, the second surface being opposite to the first surface.

7. A radar comprising the antenna according to any one of claims 1 to 6, wherein the radar is configured to transmit and receive a signal through the antenna.

8. The radar according to claim 7, wherein the radar is a vehicle-mounted radar.

9. A vehicle comprising the radar according to any one of claims 7 to 8.

## Patentansprüche

1. Antenne (201), umfassend:
• ein erstes Strahlerelement (202) und eine erste Speiseleitung (203, 204), wobei ein erstes Ende der ersten Speiseleitung (203, 204) mit dem ersten Strahlerelement (202) verbunden ist und dazu ausgelegt ist, das erste Strahlerelement (202) zu speisen, wobei das erste Strahlerelement (202) und die erste Speiseleitung (203, 204) auf einer gemeinsamen ersten Oberfläche eines dielektrischen Substrats angeordnet sind, wobei die erste Speiseleitung (203, 204) einen ersten Speiseleitungsabschnitt (203) umfasst und ein spitzer Winkel zwischen dem ersten Speiseleitungsabschnitt (203) und einer Stromrichtung des ersten Strahlerelements (202) größer oder gleich 20 Grad und kleiner oder gleich 70 Grad ist,
• einen ersten Leistungsteiler (205), ein zweites Strahlerelement (209) und eine zweite Speiseleitung (207), wobei ein erstes Ende der zweiten Speiseleitung (207) mit dem zweiten Strahlerelement (209) verbunden ist und dazu ausgelegt ist, das zweite Strahlerelement (209) zu speisen, wobei der erste Leistungsteiler (205), das zweite Strahlerelement (209), die zweite Speiseleitung (207) und das erste Strahlerelement (202) auf derselben ersten Oberfläche des dielektrischen Substrats angeordnet sind, wobei ein erstes Ende des ersten Leistungsteilers (205) separat mit einem zweiten Ende der ersten Speiseleitung (203, 204) und einem zweiten Ende der zweiten Speiseleitung (207) verbunden ist, das zweite Strahlerelement (209) und das erste Strahlerelement (202) auf dem dielektrischen Substrat symmetrisch bezüglich des ersten Leistungsteilers (205) angeordnet sind und die zweite Speiseleitung (207) und die erste Speiseleitung (203, 204) auf dem dielektrischen Substrat symmetrisch bezüglich des ersten Leistungsteilers (205) angeordnet sind, wobei eine Speiseart der Antenne (201) Parallelspeisung ist,
• einen zweiten Leistungsteiler (210) und eine dritte Speiseleitung (206, 208), wobei der zweite Leistungsteiler (210), die dritte Speiseleitung (206, 208) und das erste Strahlerelement (202) auf derselben ersten Oberfläche des dielektrischen Substrats angeordnet sind, wobei der zweite Leistungsteiler (210) und der erste Leistungsteiler (205) auf dem dielektrischen Substrat zentrosymmetrisch bezüglich eines Mittelpunktes des zweiten Strahlerelements (209) angeordnet sind und ein zweites Ende des ersten Leistungsteilers (205) mit einem ersten Ende des zweiten Leistungsteilers (209) über die dritte Speiseleitung (206, 208) verbunden ist, wobei die dritte Speiseleitung (206, 208) mindestens einen dritten Speiseleitungsabschnitt umfasst und ein spitzer Winkel zwischen jedem dritten Speiseleitungsabschnitt und der Stromrichtung des ersten Strahlerelements (202) größer oder gleich 20 Grad und kleiner oder gleich 70 Grad ist.

2. Antenne nach Anspruch 1, wobei die erste Speiseleitung ferner einen zweiten Speiseleitungsabschnitt umfasst; und
ein erstes Ende des ersten Speiseleitungsabschnitts mit einem ersten Ende des zweiten Speiseleitungsabschnitts verbunden ist und ein eingeschlossener Winkel zwischen dem ersten Speiseleitungsabschnitt und dem zweiten Speiseleitungsabschnitt größer oder gleich 70 Grad und kleiner oder gleich 135 Grad ist.

3. Antenne nach Anspruch 2, wobei ein zweites Ende des ersten Speiseleitungsabschnitts mit dem ersten Strahlerelement verbunden ist.

4. Antenne nach einem der vorhergehenden Ansprüche, wobei das erste Ende des ersten Leistungsteilers und ein zweites Ende des zweiten Leistungsteilers in gleicher Orientierung angeordnet sind und das zweite Ende des ersten Leistungsteilers und das erste Ende des zweiten Leistungsteilers in gleicher Orientierung angeordnet sind, sodass der zweite Leistungsteiler in umgekehrter Orientierung zum ersten Leistungsteiler angeordnet ist.

5. Antenne nach einem der Ansprüche 1 bis 4, wobei eine Betriebsfrequenz der Antenne größer als 60 GHz ist.

6. Antenne nach einem der Ansprüche 1 bis 5, wobei die Antenne ferner Folgendes umfasst:
eine Reflektorplatte, wobei die Reflektorplatte auf einer zweiten Oberfläche des dielektrischen Substrats angeordnet ist, wobei die zweite Oberfläche der ersten Oberfläche gegenüberliegt.

7. Radar, umfassend die Antenne nach einem der Ansprüche 1 bis 6, wobei das Radar dazu ausgelegt ist, ein Signal über die Antenne zu senden und zu empfangen.

8. Radar nach Anspruch 7, wobei das Radar ein fahrzeugmontiertes Radar ist.

9. Fahrzeug, umfassend das Radar nach einem der Ansprüche 7 bis 8.

## Revendications

1. Antenne (201) comprenant :
un premier élément rayonnant (202) et une première ligne d'alimentation (203, 204), dans laquelle une première extrémité de la première ligne d'alimentation (203, 204) est connectée au premier élément rayonnant (202) et est configurée pour alimenter le premier élément rayonnant (202), dans laquelle le premier élément rayonnant (202) et la première ligne d'alimentation (203, 204) sont disposés sur une même première surface d'un substrat diélectrique, dans laquelle la première ligne d'alimentation (203, 204) comprend un premier segment de ligne d'alimentation (203) et un angle aigu entre le premier segment de ligne d'alimentation (203) et une direction actuelle du premier élément rayonnant (202) est supérieur ou égal à 20 degrés, et est inférieur ou égal à 70 degrés,
un premier diviseur de puissance (205), un second élément rayonnant (209), et une deuxième ligne d'alimentation (207), dans laquelle une première extrémité de la deuxième ligne d'alimentation (207) est connectée au second élément rayonnant (209) et est configurée pour alimenter le second élément rayonnant (209), dans laquelle le premier diviseur de puissance (205), le second élément rayonnant (209), la deuxième ligne d'alimentation (207) et le premier élément rayonnant (202) sont disposés sur la même première surface du substrat diélectrique, dans laquelle une première extrémité du premier diviseur de puissance (205) est connectée séparément à une seconde extrémité de la première ligne d'alimentation (203, 204) et une seconde extrémité de la deuxième ligne d'alimentation (207), le second élément rayonnant (209) et le premier élément rayonnant (202) sont disposés symétriquement sur le substrat diélectrique par rapport au premier diviseur de puissance (205), et la deuxième ligne d'alimentation (207) et la première ligne d'alimentation (203, 204) sont disposées symétriquement sur le substrat diélectrique par rapport au premier diviseur de puissance (205), dans laquelle une alimentation de l'antenne (201) est une alimentation parallèle,
un second diviseur de puissance (210) et une troisième ligne d'alimentation (206, 208), dans laquelle le second diviseur de puissance (210), la troisième ligne d'alimentation (206, 208) et le premier élément rayonnant (202) sont disposés sur la même première surface du substrat diélectrique, dans laquelle le second diviseur de puissance (210) et le premier diviseur de puissance (205) sont centrosymétriques sur le substrat diélectrique par rapport à un point central du second élément rayonnant (209), et une seconde extrémité du premier diviseur de puissance (205) est connectée à une première extrémité du second diviseur de puissance (209) par l'intermédiaire de la troisième ligne d'alimentation (206, 208), dans laquelle la troisième ligne d'alimentation (206, 208) comprend au moins un troisième segment de ligne d'alimentation, et un angle aigu entre chaque troisième segment de ligne d'alimentation et la direction actuelle du premier élément rayonnant (202) est supérieur ou égal à 20 degrés, et est inférieur ou égal à 70 degrés.

2. Antenne selon la revendication 1, dans laquelle la première ligne d'alimentation comprend en outre un deuxième segment de ligne d'alimentation ; et
une première extrémité du premier segment de ligne d'alimentation est connectée à une première extrémité du deuxième segment de ligne d'alimentation, et un angle inclus entre le premier segment de ligne d'alimentation et le deuxième segment de ligne d'alimentation est supérieur ou égal à 70 degrés, et est inférieur ou égal à 135 degrés.

3. Antenne selon la revendication 2, dans laquelle une seconde extrémité du premier segment de ligne d'alimentation est connectée au premier élément rayonnant.

4. Antenne selon l'une quelconque des revendications précédentes, dans laquelle la première extrémité du premier diviseur de puissance et une seconde extrémité du second diviseur de puissance sont dans une même orientation, et la seconde extrémité du premier diviseur de puissance et la première extrémité du second diviseur de puissance sont dans une même orientation, de telle sorte que le second diviseur de puissance est placé dans une orientation inverse par rapport au premier diviseur de puissance.

5. Antenne selon l'une quelconque des revendications 1 à 4, dans laquelle une fréquence de fonctionnement de l'antenne est supérieure à 60 GHz.

6. Antenne selon l'une quelconque des revendications 1 à 5, l'antenne comprenant en outre :
un panneau de réflexion, dans laquelle le panneau de réflexion est disposé sur une seconde surface du substrat diélectrique, la seconde surface étant opposée à la première surface.

7. Radar comprenant l'antenne selon l'une quelconque des revendications 1 à 6, le radar étant configuré pour émettre et recevoir un signal par l'intermédiaire de l'antenne.

8. Radar selon la revendication 7, le radar étant un radar monté sur un véhicule.

9. Véhicule comprenant le radar selon l'une quelconque des revendications 7 et 8.
